# EUROPEAN PATENT APPLICATION

(11) **EP 4 672 294 A1**
(43) Date of publication of application: **31.12.2025**
(21) Application number: 23924235.7
(22) Date of filing: 18.12.2023
(51) Int. Cl.: H01H 85/08, H01M 50/583

(54) **FUSE DEVICE AND BATTERY MODULE**

(30) Priority: 22.02.2023 JP 2023025994
(71) Applicant: AESC Japan Ltd., Yokohama-Shi, Kanagawa 220-0012 (JP)
(72) Inventor: BATTULA, Lokesh Yadav, Zama-shi, Kanagawa 252-0012 (JP); SAKAMOTO, Ryo, Zama-shi, Kanagawa 252-0012 (JP); NAKAI, Masayuki, Zama-shi, Kanagawa 252-0012 (JP); TOYOSAKI, Shinkichi, Zama-shi, Kanagawa 252-0012 (JP); YANAGIHARA, Yasuhiro, Zama-shi, Kanagawa 252-0012 (JP); MONNO, Dai, Zama-shi, Kanagawa 252-0012 (JP)
(74) Representative: Mathys & Squire
(86) International application number: PCT/JP2023/045295
(87) International publication number: WO 2024/176591

(57) **Abstract**

A first fuse device (40A) includes a narrow portion (414A) that functions as a fuse, and a first wide portion (412A) electrically connected to the narrow portion (414A) and having a cross-sectional area greater than the cross-sectional area of the narrow portion (414A). A first curve (404A) is provided from the outer edge of the narrow portion (414A) to the outer edge of the first wide portion (412A).

## Description

### TECHNICAL FIELD

The present invention relates to a fuse device and a battery module.

### BACKGROUND ART

A battery module such as a lithium-ion secondary battery may include a plurality of stacked battery cells. In the battery module as described above, a plurality of the battery cells is electrically connected to each other by a positive electrode lead and a negative electrode lead drawn from an exterior member of the battery cell. The battery module may include a fuse to prevent overcurrent from flowing.

Patent Document 1 describes one example of a fuse of a battery module. In this example, the width of a portion of a conductive plate accommodated in a holder is narrower than the width of another portion of the conductive plate. This allows for the portion of the conductive plate to function as a fuse.

Patent Document 2 describes one example of a fuse of a battery module. In this example, the thickness of a portion of a bus bar mounted on a bus bar frame is thinner than the thickness of another portion of the bus bar. This allows for the portion of the bus bar to function as a fuse.

### RELATED DOCUMENT

### PATENT DOCUMENT

Patent Document 1: Japanese Patent Application Publication No. 2000-182506
Patent Document 2: Japanese Patent Application Publication (Translation of PCT Application) No. 2020-528650

### DISCLOSURE OF THE INVENTION

### TECHNICAL PROBLEM

As described in Patent Document 1 or Patent Document 2, for example, a portion of a conductor with a small cross-sectional area may function as a fuse. Depending on the shape from the portion with a small cross-sectional area to the portion with a large cross-sectional area of the conductor, however, it may be difficult to achieve the desired characteristics of the fuse. For example, it may be difficult to stabilize melting of the fuse, or it may be difficult to increase the mechanical strength of the conductor.

An example of the object of the present invention is to achieve the desired characteristics of the fuse. Another object of the present invention will be clarified from description of the present specification.

### SOLUTION TO PROBLEM

An aspect of the present invention is as follows.
[1] A fuse device including:
   a first conductive portion that functions as a fuse;
      and
   a second conductive portion electrically connected to the first conductive portion and having a cross-sectional area greater than a cross-sectional area of the first conductive portion, wherein
   a curve is provided from an outer edge of the first conductive portion to an outer edge of the second conductive portion.
[2] The fuse device according to [1], wherein
   the curve is provided at an inner corner portion from the outer edge of the first conductive portion to the outer edge of the second conductive portion, and
   the curve of the inner corner portion is an arc shape with a radius of curvature equal to or greater than 1.0 mm and equal to or less than 3.0 mm.
[3] The fuse device according to [1], wherein
   the curve is provided at an inner corner portion from the outer edge of the first conductive portion to the outer edge of the second conductive portion, and
   the curve of the inner corner portion partially includes at least a curve shape that passes through a region enclosed by an outline of the curve when the curve has an arc shape that has a 1.0 mm radius of curvature and an outline of the curve when the curve has an arc shape that has a 3.0 mm radius of curvature.
[4] The fuse device according to any one of [1] to [3], wherein
   a cross-sectional area of the first conductive portion is 40 mm² or greater and 100 mm² or less.
[5] A battery module including:
   the fuse device according to any one of [1] to [4];
      and
   at least one battery cell electrically connected to the fuse device.

### ADVANTAGEOUS EFFECTS OF INVENTION

According to the above aspect of the present invention, the desired characteristic of the fuse can be achieved.

### BRIEF DESCRIPTION OF THE DRAWINGS

[Fig. 1] A perspective view of a battery module according to an embodiment as viewed from the front.
[Fig. 2] A perspective view of the battery module according to the embodiment as viewed from the rear.
[Fig. 3] A diagram with an accommodation body removed from Fig. 1.
[Fig. 4] A diagram with the accommodation body removed from Fig. 2.
[Fig. 5] A perspective view of a cell stack according to the embodiment as viewed from the front.
[Fig. 6] An enlarged view of the position of a first voltage detection device according to the embodiment where a first fuse device is provided.
[Fig. 7] A top view of a first conductor according to the embodiment.
[Fig. 8] A top view of a first conductor according to a variant.

### DESCRIPTION OF EMBODIMENTS

Hereinafter, an embodiment and a variant according to the present invention are described by using the drawings. In all drawings, a similar constituent element is indicated by a similar reference sign, and description thereof is omitted as necessary.

In the present specification, unless otherwise specifically noted, an ordinal number such as "first", "second", and "third" is attached to simply distinguish a configuration to which a similar name is attached, and it does not mean a specific feature (e.g., order or a degree of importance) of a configuration.

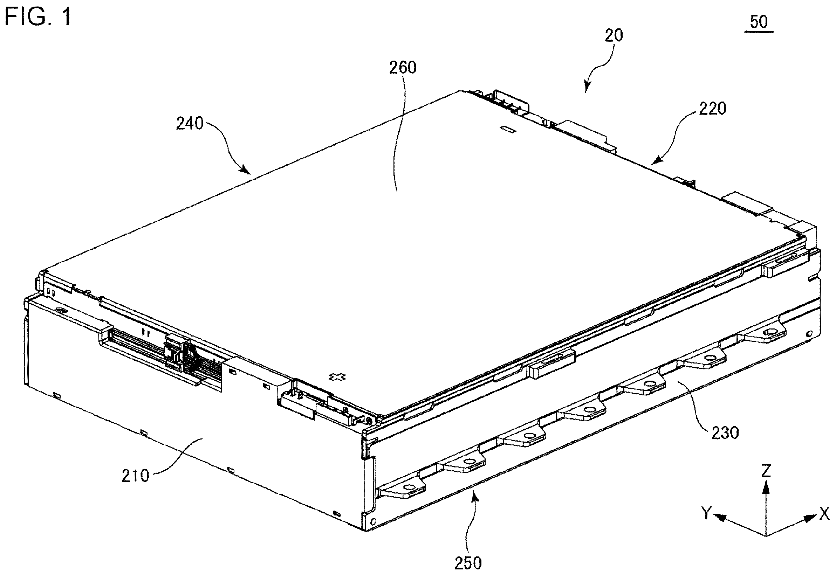

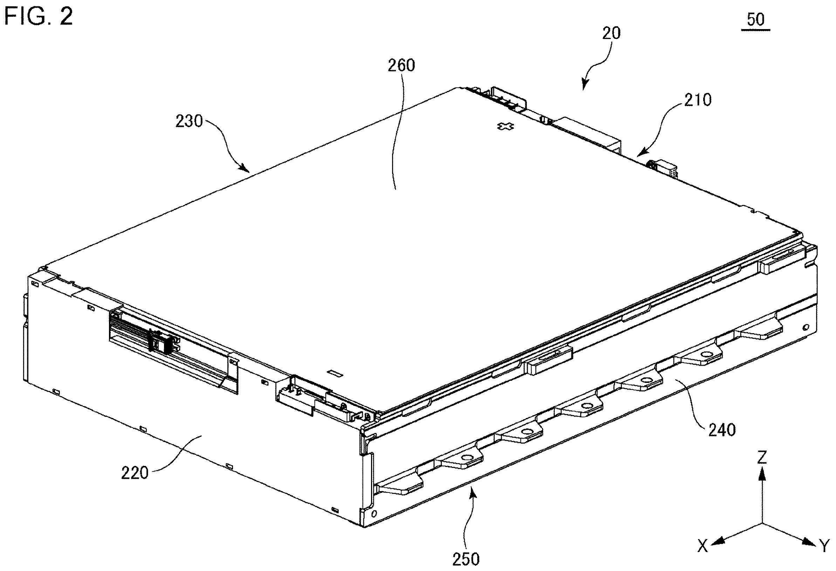

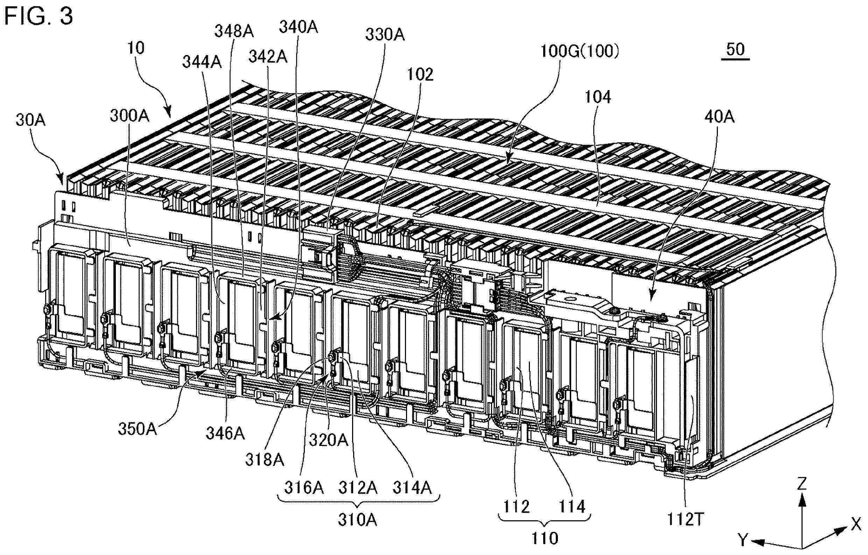

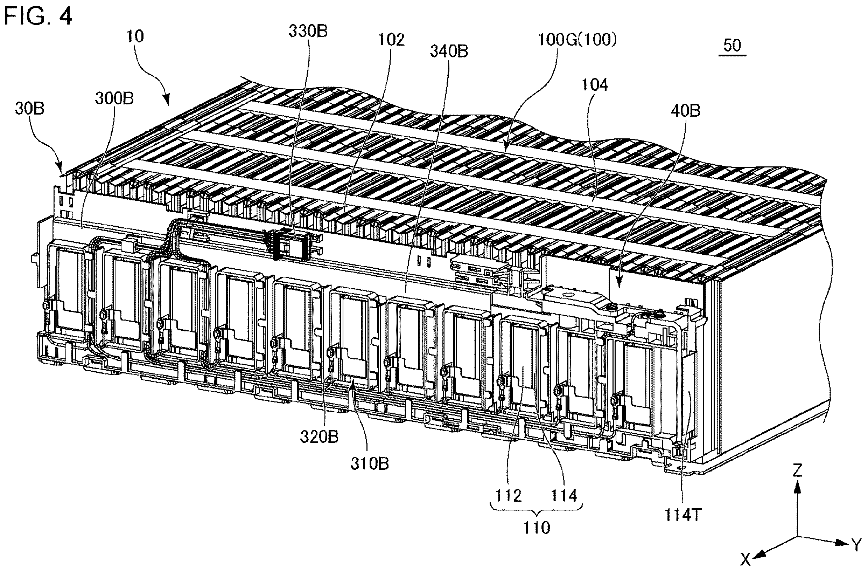

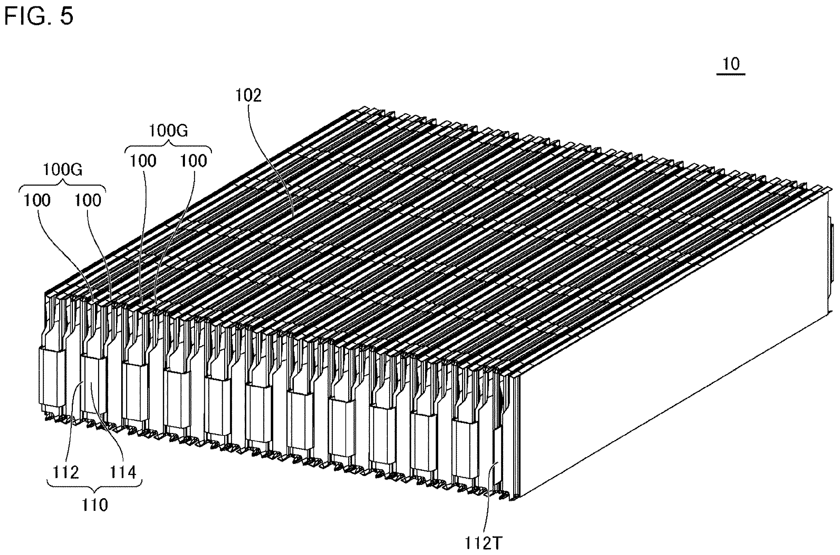

Fig. 1 is a perspective view of a battery module 50 according to an embodiment as viewed from the front. Fig. 2 is a perspective view of the battery module 50 according to the embodiment as viewed from the rear. Fig. 3 is a diagram with an accommodation body 20 removed from Fig. 1. Fig. 4 is a diagram with the accommodation body 20 removed from Fig. 2. Fig. 5 is a perspective view of a cell stack 10 according to the embodiment as viewed from the front.

In Figs. 1 to 5, the arrow indicating a first direction X, a second direction Y, and a third direction Z indicates that a direction directed from the base end toward the tip end of the arrow is a positive direction of the direction indicated by the arrow and that a direction directed from the tip end toward the base end of the arrow is a negative direction of the direction indicated by the arrow. The first direction X indicates one direction parallel to a horizontal direction perpendicular to a vertical direction. Specifically, the first direction X indicates a front-rear direction of the battery module 50. The positive direction of the first direction X is a direction directed from the front toward the rear of the battery module 50. The negative direction of the first direction X is a direction directed from the rear toward the front of the battery module 50. The second direction Y indicates a direction perpendicular to the vertical direction and to the first direction X. The second direction Y indicates a left-right direction of the battery module 50. The positive direction of the second direction Y is a direction directed from the right toward the left of the battery module 50 as viewed in front of the battery module 50. The negative direction of the second direction Y is a direction directed from the left toward the right of the battery module 50 as viewed in front of the battery module 50. The third direction Z indicates a direction parallel to the vertical direction. The positive direction of the third direction Z is a direction directed from the bottom toward the top of the battery module 50. The negative direction of the third direction Z is a direction directed from the top toward the bottom of the battery module 50.

The relations among the first direction X, the second direction Y, the third direction Z, the vertical direction, and the horizontal direction are not limited to the above example. For example, the battery module 50 may be disposed such that the first direction X or the second direction Y is parallel to the vertical direction.

Hereinafter, unless otherwise specifically noted, "right" and "left" each means a right and a left as viewed in front of the battery module 50.

In the present embodiment, the battery module 50 is mounted on a moving body such as an electric vehicle (EV) and a hybrid electric vehicle (HEV). The capacity of the battery module 50 is 50 kWh or greater and 100 kWh or less, for example. However, the usage of the battery module 50 is not limited to this example.

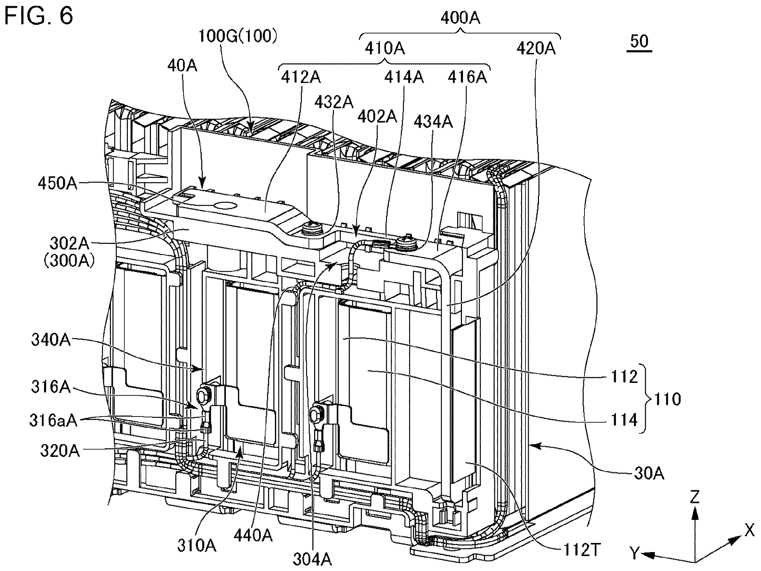

The battery module 50 includes the cell stack 10, the accommodation body 20, a first voltage detection device 30A, and a second voltage detection device 30B. The first voltage detection device 30A includes a first fuse device 40A. The second voltage detection device 30B includes a second fuse device 40B. As will be described later by using Fig. 6, the first fuse device 40A includes a fuse electrically connected to a terminal positive electrode lead 112T. The second fuse device 40B includes a fuse electrically connected to a terminal negative electrode lead 114T.

As illustrated in Fig. 5, the cell stack 10 includes a plurality of cell groups 100G stacked in the second direction Y. Each cell group 100G includes a plurality of battery cells 100 stacked in the second direction Y. Each battery cell 100 includes an exterior member 102, a positive electrode lead 112, and a negative electrode lead 114.

In the present embodiment, each cell group 100G includes two battery cells 100. However, each cell group 100G may include three or more battery cells 100. In the cell stack 10, a plurality of the cell groups 100G may not be connected in series, but a plurality of the battery cells 100 may be connected in series. In other words, the number of battery cells 100 included in a cell group 100G may be only one.

Each battery cell 100 is placed substantially vertically. The battery cell 100 placed substantially vertically does not only mean the battery cell 100 placed strictly vertically. The battery cell 100 placed substantially vertically means that the battery cell 100 may be tilted obliquely with respect to the third direction Z to the extent that it does not interfere with the operation of the battery module 50.

As illustrated in Figs. 3 and 4, a plurality of adhesive members 104 is disposed on the upper surface of the cell stack 10. Each adhesive member 104 is a cured member of liquid resin, for example. In the present embodiment, a plurality of the adhesive members 104 is regularly disposed. Specifically, a plurality of the adhesive members 104 extends in parallel to the second direction Y and is aligned in parallel to the first direction X. An unillustrated insulation sheet is disposed on the upper side of a plurality of the adhesive members 104. A sixth cover member 260 to be described later is disposed on the upper side of the unillustrated insulation sheet. The layout of the adhesive member 104 is not limited to the layout according to the present embodiment. For example, the adhesive member 104 may be provided over the entirety of the upper surface of the cell stack 10. Alternatively, a plurality of the adhesive members 104 may be disposed irregularly or may be arranged according to a rule different from a rule illustrated in Figs. 3 and 4. An adhesive member is also disposed on the lower surface of the cell stack 10, as on the upper surface of the cell stack 10.

The exterior member 102 accommodates an unillustrated positive electrode, an unillustrated negative electrode, and an unillustrated separator along with unillustrated electrolytic liquid. In one example, the positive electrode, the negative electrode, and the separator are stacked within the exterior member 102 in the second direction Y. Alternatively, the positive electrode, the negative electrode, and the separator may be wound within the exterior member 102.

The positive electrode lead 112 is drawn substantially horizontally from one of the front end and the rear end of the exterior member 102. The positive electrode lead 112 is electrically connected to the positive electrode within the exterior member 102. In one example, the positive electrode lead 112 is composed of metal such as aluminum. The positive electrode lead 112 drawn substantially horizontally does not only mean the positive electrode lead 112 drawn strictly horizontally. The positive electrode lead 112 drawn substantially horizontally means that the positive electrode lead 112 may be drawn in a direction deviating from the horizontal direction to the extent that it does not interfere with the operation of the battery module 50.

The negative electrode lead 114 is drawn substantially horizontally from the other of the front end and the rear end of the exterior member 102. The negative electrode lead 114 is electrically connected to the negative electrode within the exterior member 102. In one example, the negative electrode lead 114 is composed of metal different from metal composing the positive electrode lead 112, such as copper. The negative electrode lead 114 drawn substantially horizontally does not only mean the negative electrode lead 114 drawn strictly horizontally. The negative electrode lead 114 drawn substantially horizontally means that the negative electrode lead 114 may be drawn in a direction deviating from the horizontal direction to the extent that it does not interfere with the operation of the battery module 50.

When a plurality of the battery cells 100 is included in each cell group 100G, the plurality of battery cells 100 is connected in parallel. Specifically, a plurality of the battery cells 100 included in each cell group 100G is stacked in the second direction Y. The positive electrode leads 112 of a plurality of the battery cells 100 included in each cell group 100G are bundled in the second direction Y and connected to each other. The negative electrode leads 114 of a plurality of the battery cells 100 included in each cell group 100G are bundled in the second direction Y and connected to each other. The adjacent battery cells 100 may be stacked via an adhesive member. Examples of the adhesive member include a double-sided tape, a substance that cures liquid resin, and the like.

The plurality of the cell groups 100G is connected in series via a lead portion 110. The lead portion 110 includes a plurality of the positive electrode leads 112 of one of the cell groups 100G adjacent to each other in the second direction Y and a plurality of the negative electrode leads 114 of the other of the cell groups 100 adjacent to each other in the second direction Y. A plurality of the positive electrode leads 112 and the negative electrode leads 114 included in the lead portion 110 are joined to each other by a joining method such as laser welding, ultrasonic bonding, resistance welding, or adhesion. When a material of the positive electrode lead 112 and a material of the negative electrode lead 114 are different, laser welding is preferable among these joining methods in light of high reliability of joining and reduction of the number of parts. The lead portion 110 is folded between cell groups 100G adjacent to each other in the second direction Y. Thus, a plurality of the lead portions 110 is aligned in the second direction Y in front of the cell stack 10. A plurality of the lead portions 110 is aligned in the second direction Y behind the cell stack 10.

In the present embodiment, as illustrated in Fig. 3, the plurality of the negative electrode leads 114 is located in front of the plurality of the positive electrode leads 112 at the joint portion between a plurality of the positive electrode leads 112 and a plurality of the negative electrode leads 114 of each lead portion 110 located in front of the cell stack 10. As illustrated in Fig. 4, the plurality of the positive electrode leads 112 is located behind the plurality of the negative electrode leads 114 at the joint portion between a plurality of the positive electrode leads 112 and a plurality of the negative electrode leads 114 of each lead portion 110 located behind the cell stack 10. When a plurality of the positive electrode leads 112 is located in front of a plurality of the negative electrode leads 114 in front of the cell stack 10, it is preferable that the material of a first tip end portion 314A to be described later is the same as the material of the positive electrode lead 112.

**In** the present embodiment, as illustrated in Fig. 3, a plurality of the positive electrode leads 112 included in the cell group 100G at one end of a plurality of the cell groups 100G connected in series is located on the front right side of the cell stack 10. Hereinafter, a plurality of the positive electrode leads 112 included in the cell group 100G at one end of a plurality of the cell groups 100G connected in series is referred to as a terminal positive electrode lead 112T as necessary. As illustrated in Fig. 4, a plurality of the negative electrode leads 114 included in the cell group 100G at the other end of the plurality of the cell groups 100G connected in series is located on the rear left side of the cell stack 10. Hereinafter, a plurality of the negative electrode leads 114 included in the cell group 100G at the other end of the plurality of the cell groups 100G connected in series is referred to as a terminal negative electrode lead 114T as necessary.

The structure of the cell stack 10 is not limited to the structure according to the present embodiment. For example, the terminal negative electrode lead 114T may not be located on the rear left side of the cell stack 10, but may be located on the front left side thereof. In this example, both the terminal positive electrode lead 112T and the terminal negative electrode lead 114T are located on the front side. Whether the terminal negative electrode lead 114T is located on the front left side or the rear left side of the cell stack 10 can be adjusted by the number of cell groups 100G stacked in the second direction Y.

In the present embodiment, as illustrated in Fig. 3, the front surface of the joint portion between the positive electrode lead 112 and the negative electrode lead 114 of each lead portion 110 located in front of the cell stack 10 is substantially in parallel to a direction perpendicular to the first direction X. The front surface of the joint potion substantially in parallel to the direction perpendicular to the first direction X does not only mean the front surface of the joint portion in strictly parallel to the direction perpendicular to the first direction X. The front surface of the joint potion substantially in parallel to the direction perpendicular to the first direction X also means the front surface of the joint portion slightly deformed from being parallel to the direction perpendicular to the first direction X to the extent that it does not interfere with the function of the lead portion 110. In the present embodiment, a first voltage detection portion 310A to be described later can be easily joined to the front surface of the lead portion 110 as compared with the case where the front surface of the joint portion is curved. In another example different from the present embodiment, the front surface of the joint portion described above may be curved.

In the present embodiment, as illustrated in Fig. 4, the rear surface of the joint portion between the positive electrode lead 112 and the negative electrode lead 114 of each lead portion 110 located on the rear side of the cell stack 10 is substantially in parallel to the direction perpendicular to the first direction X, in the same way as the front surface of the joint portion between the positive electrode lead 112 and the negative electrode lead 114 of each lead portion 110 located on the front side of the cell stack 10.

The accommodation body 20 accommodates the cell stack 10, the first voltage detection device 30A, and the second voltage detection device 30B. The accommodation body 20 includes a first cover member 210, a second cover member 220, a third cover member 230, a fourth cover member 240, a fifth cover member 250, and the sixth cover member 260. In the present embodiment, the first cover member 210, the second cover member 220, the third cover member 230, the fourth cover member 240, the fifth cover member 250, and the sixth cover member 260 are composed of metal including aluminum as a main component, for example. However, the material composing the first cover member 210, the second cover member 220, the third cover member 230, the fourth cover member 240, the fifth cover member 250, and the sixth cover member 260 is not limited to this example.

The first cover member 210 covers the front side of the cell stack 10, and the first voltage detection device 30A. The second cover member 220 covers the rear side of the cell stack 10, and the second voltage detection device 30B. The third cover member 230 covers the right side of the cell stack 10. The fourth cover member 240 covers the left side of the cell stack 10. The fifth cover member 250 covers the lower side of the cell stack 10. The sixth cover member 260 covers the upper side of the cell stack 10.

As illustrated in Figs. 1 and 2, the mark "+" is attached to the front right portion on the upper surface of the sixth cover member 260. The mark "-" is attached to the rear left portion on the upper surface of the sixth cover member 260. The mark "+" indicates that the terminal positive electrode lead 112T illustrated in Fig. 3 is located at the position where the mark "+" is attached. The mark "-" indicates that the terminal negative electrode lead 114T illustrated in Fig. 4 is located at the position where the mark "-" is attached. Accordingly, even if a user of the battery module 50 can hardly see the cell stack 10 from outside of the accommodation body 20, the position of the terminal positive electrode lead 112T and the position of the terminal negative electrode lead 114T can be seen from the mark "+" and the mark "-".

The first voltage detection device 30A includes a first holding body 300A, a plurality of the first voltage detection portions 310A, a plurality of first voltage detection lines 320A, and a first connector 330A.

The first holding body 300A is provided in front of the cell stack 10. The first holding body 300A is an insulation member. Examples of used insulation member include resins such as polypropylene, polybutylene terephthalate, and modified polyphenylene ether, as well as other resins with equivalent or superior hardness, heat resistance, and insulating properties. The first holding body 300A is mounted to the accommodation body 20 by mechanical joint such as snap fitting or screwing.

Each first voltage detection portion 310A includes a first base end portion 312A, the first tip end portion 314A, and a first connection portion 316A.

The first base end portion 312A is supported to be movable in the first direction X along a first support shaft 318A provided in the first holding body 300A. Thus, each first voltage detection portion 310A is held by the first holding body 300A. The first support shaft 318A extends through in the first direction X a through-hole formed in the first base end portion 312A. The diameter of the front end portion of the first support shaft 318A in the direction perpendicular to the first direction X is greater than the diameter of the through-hole of the first base end portion 312A in the direction perpendicular to the first direction X. As a result, the first base end portion 312A is prevented from exiting the first support shaft 318A toward the front of the first support shaft 318A.

In the present embodiment, as viewed from the front side of the cell stack 10, the first tip end portion 314A is displaced in the horizontal direction and in the vertical direction with respect to the first base end portion 312A. Specifically, as viewed from the front side of the cell stack 10, the first tip end portion 314A is located on the lower right side of the first base end portion 312A. Thus, a gap through which a part of the front surface of the lead portion 110 is exposed forward is formed on the right side of the first base end portion 312A and on the upper side of the first tip end portion 314A. As a result, at least a part of the joint portion such as a laser welding portion between the positive electrode lead 112 and the negative electrode lead 114 can be provided at the region of the lead portion 110 overlapping the gap in the first direction X. Specifically, the joint portion of the lead portion 110 needs not overlap with the first tip end portion 314A in the first direction X. In the present embodiment, therefore, the length of the joint portion of the lead portion 110 can be longer in the vertical direction than when the first tip end portion 314A is located on the right side of the first base end portion 312A without being displaced downward with respect to the first base end portion 312A. Accordingly, in the present embodiment, the connection between the positive electrode lead 112 and the negative electrode lead 114 on the lead portion 110 can be better than the above case.

In the present embodiment, the first tip end portion 314A is displaced relative to the first base end portion 312A toward the side where the lead portion 110 is located. In the present embodiment, therefore, the first tip end portion 314A can be more easily brought closer to the lead portion 110 and the first tip end portion 314A can be connected to the lead portion 110 more easily, rather than when the position of the first base end portion 312A in the first direction X and the position of the first tip end portion 314A in the first direction X are aligned in the first direction X. In the present embodiment, the movable range of the first base end portion 312A can be wider in the first direction X rather than the above case.

The first connection portion 316A protrudes downward from the first base end portion 312A. One end of the first voltage detection line 320A is connected to the first connection portion 316A. The first connection portion 316A may be integrated with the first base end portion 312A, for example. As illustrated in Fig. 6 to be described later, in the present embodiment, the first connection portion 316A includes two first barrels 316aA that crimp one end of the first voltage detection line 320A. The two first barrels 316aA are aligned in the vertical direction. One end of the first voltage detection line 320A enters the internal space of the two first barrels 316aA substantially in parallel to the vertical direction from below the two first barrels 316aA and is crimped by the two first barrels 316aA. Thus, one end of the first voltage detection line 320A is fixed to the first connection portion 316A. However, the method of fixing one end of the first voltage detection line 320A to the first connection portion 316A is not limited to the method according to the present embodiment. For example, the number of the first barrels 316aA provided in each first connection portion 316A may be only one. One end of the first voltage detection line 320A may be soldered to the first connection portion 316A.

The shape of the first voltage detection portion 310A is not limited to the shape according to the present embodiment if the first tip end portion 314A does not overlap the joint portion between the positive electrode lead 112 and the negative electrode lead 114 of the lead portion 110 in the first direction X. For example, the above gap may not be formed on the right side of the first base end portion 312A and on the upper side of the first tip end portion 314A as viewed from the front side of the cell stack 10. The position of the first base end portion 312A in the first direction X and the position of the first tip end portion 314A in the first direction X may be aligned in the first direction X.

Each of the plurality of the first voltage detection portions 310A is connected to each of the plurality of the lead portions 110 in front of the cell stack 10. Specifically, each first tip end portion 314A is joined to each lead portion 110 in front of the cell stack 10 by a joint method such as laser welding. In the present embodiment, the rear surface of the first tip end portion 314A is joined to the front surface of the joint portion between the positive electrode lead 112 and the negative electrode lead 114 of the lead portion 110. Preferably, the first tip end portion 314A may be composed of the same material as that of the portion of the lead portion 110 in contact with the first tip end portion 314A. In the present embodiment, the first tip end portion 314A is in contact with the negative electrode lead 114. In this example, the first tip end portion 314A can be more easily jointed to the negative electrode lead 114, rather than when the first tip end portion 314A is composed of a material different from that of the negative electrode lead 114. In another example, the first tip end portion 314A may be composed of a material different from that of the portion of the lead portion 110 in contact with the first tip end portion 314A.

Each of the plurality of the first voltage detection lines 320A electrically connects each of the plurality of the first voltage detection portions 310A to the first connector 330A. As described above, one end of each first voltage detection line 320A is connected to the first connection portion 316A. The other end of each first voltage detection line 320A is connected to the first connector 330A. In the present embodiment, a part of each first voltage detection line 320A is drawn into a space below a first frame 340A from the first connection portion 316A via a notch 350A formed in the first frame 340A to be described later. The notch 350A is formed at the corner of the first frame 340A between a second edge portion 344A and a third edge portion 346A to be described later. Another part of each first voltage detection line 320A passes through a space between the adjacent first frames 340A in the region displaced rightward from the middle of the first holding body 300A and is drawn from the space below a plurality of the first frames 340A to the first connector 330A located above a plurality of the first frames 340A. The position of the first voltage detection portion 310A, routing of the first voltage detection line 320A, the position of the notch 350A, and the position of the first connector 330A are not limited to the example according to the present embodiment.

In the present embodiment, at least a part of a region of the first voltage detection line 320A located between the first connection portion 316A and the notch 350A has flexibility. When the first base end portion 312A is moved in the first direction X along the first support shaft 318A, the first voltage detection line 320A may be in contact with the first holding body 300A or the first frame 340A near the notch 350A. In such a case, the flexing at least the above part of the first voltage detection line 320A allows for the first base end portion 312A to move in the first direction X along the first support shaft 318A.

The first holding body 300A includes a plurality of the first frames 340A. The first frame 340A is an insulation member. Examples of used insulation member include resins such as polypropylene, polybutylene terephthalate, and modified polyphenylene ether, as well as other resins with equivalent or superior hardness, heat resistance, and insulation properties. Each of the plurality of the first frames 340A surrounds each of the plurality of the lead portions 110 and each of the plurality of the first voltage detection portions 310A. As a result, the lead portion 110 and the first voltage detection portion 310A can be protected from external impact by the first frame 340A. Each first frame 340A may not be located over the entirety of a region surrounding each lead portion 110 and each first voltage detection portion 310A. Each first frame 340A may be located on at least a part of the region surrounding each lead portion 110 and each first voltage detection portion 310A. The first holding body 300A may be made of a single member or may be made of a plurality of members combined with each other.

Each first frame 340A includes a first edge portion 342A, the second edge portion 344A, the third edge portion 346A, and a fourth edge portion 348A. The first edge portion 342A extends in the vertical direction on the right side of the lead portion 110 and the first voltage detection portion 310A surrounded by each first frame 340A. The second edge portion 344A extends in the vertical direction on the left side of the lead portion 110 and the first voltage detection portion 310A surrounded by each first frame 340A. The third edge portion 346A extends in the left-right direction on the lower side of the lead portion 110 and the first voltage detection portion 310A surrounded by each first frame 340A. The fourth edge portion 348A extends in the left-right direction on the upper side of the lead portion 110 and the first voltage detection portion 310A surrounded by each first frame 340A.

The shape of the first frame 340A is not limited to the shape according to the present embodiment. For example, the first frame 340A may not include one of the first edge portion 342A and the second edge portion 344A. The first frame 340A may not include at least one of the third edge portion 346A and the fourth edge portion 348A.

In the present embodiment, at least a part of the insulation member constituting each first frame 340A is located between the first voltage detection portion 310A surrounded by each first frame 340A and the lead portion 110 different from the lead portion 110 connected to the first voltage detection portion 310A. In the present embodiment, therefore, the electrical insulation between the first voltage detection portion 310A surrounded by each first frame 340A and the lead portion 110 different from the lead portion 110 connected to the first voltage detection portion 310A can be secured.

Specifically, except for the rightmost first frame 340A, at least a part of the insulation member constituting the first edge portion 342A is located between the first voltage detection portion 310A located on the left side of the first edge portion 342A and the lead portion 110 located on the right side of the first edge portion 342A. Accordingly, the electrical insulation between the first voltage detection portion 310A located on the left side of the first edge portion 342A and the lead portion 110 located on the right side of the first edge portion 342A can be secured as compared with the case where the first edge portion 342A is not provided.

Except for the leftmost first frame 340A, at least a part of the insulation member constituting the second edge portion 344A is located between the first voltage detection portion 310A located on the right side of the second edge portion 344A and the lead portion 110 located on the left side of the second edge portion 344A. Accordingly, the electrical insulation between the first voltage detection portion 310A located on the right side of the second edge portion 344A and the lead portion 110 located on the left side of the second edge portion 344A can be secured as compared with the case where the second edge portion 344A is not provided.

In the present embodiment, at least a part of the insulation member constituting each first frame 340A is located between the different lead portions 110. Specifically, at least a part of the insulation member constituting each first frame 340A is located between the adjacent lead portions 110. Accordingly, the electrical insulation can be secured between the different lead portions 110, as compared with the case where at least a part of the insulation member constituting each first frame 340A is not located between the different lead portions 110.

Specifically, except for the rightmost first frame 340A, at least a part of the insulation member constituting the first edge portion 342A is located between the lead portion 110 located on the left side of the first edge portion 342A and the lead portion 110 located on the right side of the first edge portion 342A. Accordingly, the electrical insulation between the lead portion 110 located on the left side of the first edge portion 342A and the lead portion 110 located on the right side of the first edge portion 342A can be secured as compared with the case where the first edge portion 342A is not provided.

Except for the leftmost first frame 340A, at least a part of the insulation member constituting the second edge portion 344A is located between the lead portion 110 located on the right side of the second edge portion 344A and the lead portion 110 located on the left side of the second edge portion 344A. Accordingly, the electrical insulation between the lead portion 110 located on the right side of the second edge portion 344A and the lead portion 110 located on the left side of the second edge portion 344A can be secured as compared with the case where the second edge portion 344A is not provided.

The surface of the first frame 340A on the positive direction side in the first direction X may be provided with an insulative protruding portion protruding toward the positive direction side in the first direction X. At least a part of the protruding portion is located between the lead portions 110 adjacent to each other in the second direction Y. For example, the protruding portion is provided on the positive direction side in the first direction X of the first edge portion 342A of the left first frame 340A of the first frames 340A adjacent to each other in the second direction Y and on the positive direction side in the first direction X of the second edge portion 344A of the right first frame 340A of the first frames 340A adjacent to each other in the second direction Y. In this example, when the lead portions 110 adjacent to each other in the second direction Y are displaced in the second direction Y due to external impact and other factors, the lead portions 110 hits the protruding portion. As a result, the lead portions 110 adjacent to each other in the second direction Y can be prevented from colliding. The length of the protruding portion is not specifically limited, but may be, for example, a length for preventing the lead portions 110 adjacent to each other in the second direction Y from colliding. The position where the protruding portion is formed is not limited to the above example.

In the present embodiment, at least a part of the insulation member constituting each first frame 340A is located between at least one lead portion 110 and at least a part of the accommodation body 20 having conductivity. In the present embodiment, therefore, the electrical insulation between at least one lead portion 110 and at least a part of the accommodation body 20 having conductivity can be secured.

Specifically, at least a part of the third edge portion 346A is located below the lead portion 110 surrounded by each first frame 340A. In the present embodiment, the front end portion of the fifth cover member 250 is located below the lower end portion of the lead portion 110. When the fifth cover member 250 has conductivity, the contact of the lower end portion of the lead portion 110 with the front end portion of the fifth cover member 250 may cause a short circuit between the lead portion 110 and the fifth cover member 250. In the present embodiment, on the other hand, at least a part of the insulation member constituting the third edge portion 346A is located between the lower end portion of the lead portion 110 and the front end portion of the fifth cover member 250. Accordingly, the short circuit between the lead portion 110 and the fifth cover member 250 can be prevented as compared with the case where the third edge portion 346A is not provided.

In the above example, securing the electrical insulation between the lower end portion of the lead portion 110 and the front end portion of the fifth cover member 250 by the third edge portion 346A has been described. However, securing the electrical insulation between the lead portion 110 and the accommodation body 20 by the first frame 340A is not limited to the above example. For example, the electrical insulation between the upper end portion of the lead portion 110 and the front end portion of the sixth cover member 260 can be secured by the fourth edge portion 348A. The electrical insulation between the right end portion of the rightmost lead portion 110 of the plurality of the lead portions 110 and the front end portion of the third cover member 230 can be secured by the first edge portion 342A of the rightmost first frame 340A of the plurality of the first frames 340A. Furthermore, the electrical insulation between the left end potion of the leftmost lead portion 110 of the plurality of the lead portions 110 and the front end portion of the fourth cover member 240 can be secured by the second edge portion 344A of the leftmost first frame 340A of the plurality of the first frames 340A.

In the present embodiment, the second edge portion 344A of the first frame 340A surrounding the right lead portion 110 of the lead portions 110 adjacent to each other in the second direction Y and the first edge portion 342A of the first frame 340A surrounding the left lead portion 110 of the lead portions 110 adjacent to each other in the second direction Y are located between the lead portions 110 adjacent to each other in the second direction Y. As a result, the second direction Y distance between the lead portions 110 adjacent to each other in the second direction Y needs be longer than the second direction Y distance between the second edge portion 344A and the first edge portion 342A located between the lead portions 110 adjacent to each other in the second direction Y. The more the number of the battery cells 100 included in the cell group 100G is, the greater the second direction Y direction between the lead portions 110 adjacent to each other in the second direction Y is. Accordingly, the second direction Y distance between the lead portions 110 adjacent to each other in the second direction Y can be increased with more ease when the number of the battery cells 100 included in the cell group 100G is plural than when the number of the battery cells 100 included in the cell group 100G is only one.

The second voltage detection device 30B includes a second holding body 300B, a plurality of second voltage detection devices 310B, a plurality of second voltage detection lines 320B, and a second connector 330B in the same way as the first voltage detection device 30A.

The second holding body 300B is provided behind the cell stack 10. Each of the plurality of the second voltage detection portions 310B is connected to each of the plurality of the lead portions 110 behind the cell stack 10. In the present embodiment, the surface of each second voltage detection portion 310B on the negative direction side in the first direction X is joined to the surface of the joint portion between the positive electrode lead 112 and the negative electrode lead 114 of the lead portion 110 on the positive direction side in the first direction **X.** Each of the plurality of the second voltage detection lines 320B electrically connects each of the plurality of the second voltage detection portions 310B to the second connector 330B. The second holding body 300B is provided with a plurality of second frames 340B. Each of the plurality of the second frames 340B surrounds each of the plurality of the lead portions 110 provided behind the cell stack 10 and each of the plurality of the second voltage detection portions 310B in the same way as the plurality of the first frames 340A.

Fig. 6 is an enlarged view of the position of the first voltage detection device 30A according to the embodiment where the first fuse device 40A is provided.

The first fuse device 40A includes a first base 302A, a first conductor 400A, a first fixture 432A, a second fixture 434A, and a first wiring 440A.

The first base 302A includes the right end portion of the first holding body 300A. In the present embodiment, the first base 302A includes the two rightmost first frames 340A of the plurality of the first frames 340A.

The first conductor 400A is provided on the first base 302A. The first conductor 400A is composed of metal, for example. The first conductor 400A functions as a bus bar electrically connected to the terminal positive electrode lead 112T.

The first conductor 400A includes a plurality of extending bodies extending in a different direction. At least a part of at least one of a plurality of the extending bodies is held by the first base 302A.

Specifically, the first conductor 400A includes a first extending body 410A extending in the horizontal direction and a second extending body 420A extending in the vertical direction. The second extending body 420A extends downward from the right end portion of the first extending body 410A. The first extending body 410A and the second extending body 420A are integrally formed. However, the first conductor 400A may be formed by combining metal composing the first extending body 410A and metal composing the second extending body 420A, for example. However, the method of forming the first conductor 400A is not limited to this example. The shape of the first conductor 400A is not limited to the shape according to the present embodiment. For example, the first conductor 400A may not include the second extending body 420A.

The first extending body 410A includes a first wide portion 412A, a narrow portion 414A, and a second wide portion 416A. The left end of the narrow portion 414A is connected to the right end of the first wide portion 412A. The right end of the narrow portion 414A is connected to the left end of the second wide portion 416A.

The first wide portion 412A functions as a terminal for electrically connecting to an unillustrated another battery module. The left end portion of the first wide portion 412A is provided with a fastening hole 450A. For example, an unillustrated fixture for fixing an unillustrated bus bar electrically connected to another battery module to the first base 302A is fixed to the fastening hole 450A. In the present embodiment, the portion of the first wide portion 412A around the fastening hole 450A is located higher than the narrow portion 414A. However, the portion of the first wide portion 412A around the fastening hole 450A may be located at the same height as the narrow portion 414A. The fixing of the unillustrated bus bar and the first base 302A on the first wide portion 412A is not limited to the method of using the fastening hole 450A and the fixture. For example, the unillustrated bus bar and the first wide portion 412A may be joined to each other via adhesive such as resin without the fastening hole 450A.

The narrow portion 414A functions as a fuse. The width of the narrow portion 414A in the first direction X is narrower than both the width of the first wide portion 412A in the first direction X and the width of the second wide portion 416A in the first direction X. As a result, the cross-sectional area of the narrow portion 414A perpendicular to the second direction Y is smaller than both the cross-sectional area of the first wide portion 412A perpendicular to the second direction Y and the cross-sectional area of the second wide portion 416A perpendicular to the second direction Y. Accordingly, the narrow portion 414A is more easily fused than the first wide portion 412A and the second wide portion 416A when overcurrent flows through the first conductor 400A.

In the present embodiment, the narrow portion 414A is mounted on the first holding body 300A. Accordingly, the first voltage detection portion 310A and the fuse can be spatially and efficiently provided as compared with the case where the structure for holding the fuse is provided independently of the first holding body 300A.

Further, in the present embodiment, the battery module 50 can be more compact than when a tubular fuse tube is used as a fuse. Specifically, in use of the tubular fuse, the greater the energy of the battery module 50 is, the greater the size of the tubular fuse is. As a result, the space for providing the tubular fuse becomes relatively large in the relatively high energy battery module 50. When a part of the first conductor 400A functions as a fuse, on the other hand, the space for providing the fuse can be reduced as compared with the case where the tubular fuse is used.

In the present embodiment, the narrow portion 414A extends in the same direction as the extending direction of the first wide portion 412A. Specifically, the first wide portion 412A and the narrow portion 414A extend in the second direction Y. If the narrow portion 414A is provided on the second extending body 420A and extends in the direction orthogonal to the extending direction of the first wide portion 412A, it may be difficult to join the narrow portion 414A provided on the second extending body 420A to the terminal positive electrode lead 112T. In the present embodiment, on the other hand, there is no need to provide the narrow portion 414A on the second extending body 420A. In the present embodiment, therefore, the length of the joint portion between the second extending body 420A and the terminal positive electrode lead 112T in the third direction Z can be longer than in the above case. In the present embodiment, the length of the narrow portion 414A in the second direction Y can be more easily adjusted than in the above case. Furthermore, in the present embodiment, the narrow portion 414A and the terminal positive electrode lead 112T can be provided farther away from each other than in the above case. In the present embodiment, therefore, the heat generated from the narrow portion 414A can be less likely to affect the terminal positive electrode lead 112T than in the above case.

A first space 402A defining the narrow portion 414A is provided in front of the narrow portion 414A of the first extending body 410A. In the present embodiment, the first space 402A is formed with stamping by punching the portion of the conductor that constitutes the first extending body 410A in front of the portion that becomes the narrow portion 414A.

There is no space behind the narrow portion 414A of the first extending body 410A that defines the narrow portion 414A. However, the method of forming the narrow portion 414A is not limited to the method according to the present embodiment. For example, the first space 402A may be provided behind the narrow portion 414A. Alternatively, the first space 402A may be provided both in front of and behind the narrow portion 414A. The first space 402A may be formed by a through-hole extending through the first extending body 410A in the vertical direction. **In** this case, the portions of the first extending body 410A on opposite sides of the first space 402A in the first direction X become the narrow portion 414A functioning as a fuse.

When the narrow portion 414A is formed by stamping, the space defining the narrow portion 414A may be provided preferably only one of the opposite sides of the first extending body 410A in the first direction X as described in the present embodiment. In this case, there is no need for stamping to punch the portion of the conductor that constitutes the first extending body 410A behind the portion that becomes the narrow portion 414A. Compare the present embodiment and the case where the portions of the conductor that constitutes the first extending body 410A in front of and behind the portion that becomes the narrow portion 414A are punched by stamping. In the above case, since the portions in front of and behind the portion that becomes the narrow portion 414A needs to be punched simultaneously or individually, the mechanical load on the narrow portion 414A, which is the narrowest portion of the first extending body 410A, increases in the stamping as compared with the present embodiment . For this reason, the width of the narrow portion 414A in the first direction X in the above case needs to be wider than that in the present embodiment in light of reducing breakage of the narrow portion 414A. In the present embodiment, on the other hand, the width of the narrow portion 414A in the first direction X can be narrower and the degree of freedom in the size of the narrow portion 414A can be higher than in the above case.

The method of forming the narrow portion 414A is not limited to stamping. The narrow portion 414A may be formed by laser machining, for example. When the narrow portion 414A is formed by laser machining, the space defining the narrow portion 414A may be provided only on one of opposite sides of the first extending body 410A in the first direction X or may be provided on opposite sides of the first extending body 410A in the first direction X.

A second space 304A is provided below the narrow portion 414A. The second space 304A is defined by a recess portion formed on the upper surface of the first base 302A where the first extending body 410A is placed. In the present embodiment, when overcurrent flows through the first conductor 400A and the narrow portion 414A is melted, the melted narrow portion 414A is allowed to fall into the second space 304A. According to the present embodiment, therefore, the accuracy of melting of the narrow portion 414A can be increased as compared with the case where the lower surface of the narrow portion 414A is in contact with the upper surface of the first base 302A.

**In** the present embodiment, at least a part of the narrow portion 414A is located above at least one of the positive electrode lead 112 and the negative electrode lead 114. At least a part of the first base 302A is located between at least one of the positive electrode lead 112 and the negative electrode lead 114 and at least a part of the narrow portion 414A in the third direction Z. Specifically, the portion of the first base 302A that defines the bottom of the recess portion is located between at least one of the positive electrode lead 112 and the negative electrode lead 114 and at least a part of the narrow portion 414A in the third direction Z. As a result, the melted narrow portion 414A can be prevented from contacting the positive electrode lead 112 or the negative electrode lead 114 located below the narrow portion 414A.

The portion of the first base 302A located above at least one of the positive electrode lead 112 and the negative electrode lead 114 may have heat resistance. For example, a heat resistant layer may be formed on the bottom surface of the recess portion of the first base 302A. The heat resistant layer may be formed of metal or an inorganic material such as ceramics or glass. By providing the heat resistant layer, the melted narrow portion 414A can be more securely prevented from melting the main body portion of the first base 302A and contacting with the positive electrode lead 112, the negative electrode lead 114, or the first wiring 440A. The first base 302A may have heat resistance not only on the above portion of the first base 302A but also around the narrow portion 414A. For example, the melting point of the first base 302A around the narrow portion 414A may be 200 °C or higher.

The first wide portion 412A is fixed to the first base 302A by the first fixture 432A. In the present embodiment, the first fixture 432A is a screw extending through the first wide portion 412A in the vertical direction and inserted into the portion of the first base 302A located below the first wide portion 412A. The first wide portion 412A is provided with a through-hole through which the shaft portion of the first fixture 432A can be inserted in the vertical direction. The first fixture 432A may be a fixture other than a screw, such as a bis, a bolt, or the like.

The second wide portion 416A is fixed to the first base 302A by the second fixture 434A. In the present embodiment, the second fixture 434A is a screw extending through the second wide portion 416A in the vertical direction and inserted into the portion of the first base 302A located below the second wide portion 416A. The second wide portion 416A is provided with a through-hole through which the shaft portion of the second fixture 434A can be inserted in the vertical direction. The second fixture 434A may be a fixture other than a screw, such as a bis, a bolt, or the like.

In the embodiment, the first extending body 410A and the first base 302A are integrally fixed to each other by the first fixture 432A and the second fixture 434A. Accordingly, the rigidity of the first extending body 410A can be improved as compared with the case where the first extending body 410A is used alone without being fixed to the first base 302A.

In the present embodiment, a fixture such as the first fixture 432A and the second fixture 434A is attachable to and detachable from the first conductor 400A. When the first conductor 400A needs to be replaced due to melting of the narrow portion 414A or the like, therefore, the first conductor 400A can be replaced with a new first conductor 400A by detaching a fixture such as the first fixture 432A and the second fixture 434A.

The method of fixing the first conductor 400A to the first base 302A is not limited to the above example. For example, at least a part of the first conductor 400A may be joined to at least a part of the first base 302A via mechanical joint such as snap fitting.

In the present embodiment, both the first wide portion 412A and the second wide portion 416A are fixed to the first base 302A by the first fixture 432A and the second fixture 434A. In this case, the narrow portion 414A can be less likely to be subjected to the force that breaks the narrow portion 414A than when at least one of the first wide portion 412A and the second wide portion 416A is not fixed to the first base 302A. For example, the force that breaks the narrow portion 414A is generated on fixing an unillustrated fixture to the fastening hole 450A when an unillustrated bus bar for electrically connecting the battery module 50 to an unillustrated another battery module is mounted on the first wide portion 412A. This is because the fastening hole 450A and the narrow portion 414A are in the substantially same plane perpendicular to the third direction Z.

Preferably, the first fixture 432A and the second fixture 434A may be disposed at a position near the narrow portion 414A. For example, preferably, the first fixture 432A and the second fixture 434A may be positioned opposite each other across the first space 402A.

In the present embodiment, at least a part of the first wiring 440A passes through the first space 402A. In this case, the first wiring 440A can be spatially and efficiently routed as compared with the case where the first wiring 440A passes through a region different from the first space 402A.

In the present embodiment, at least a part of the first wiring 440A passes through the portion of the first base 302A displaced the portion located below the narrow portion 414A in the horizontal direction. In the present embodiment, the bottom surface of the recess portion of the first base 302A defining the second space 304A is provided with a through-hole for passing the first wiring 440A. The through-hole is located on the negative direction side in the first direction X from the region immediately below the narrow portion 414A. As a result, the narrow portion 414A that is melted and falls into the second space 304A can be less unlikely to contact with the first wiring 440A.

The first wiring 440A includes one end connected to the second wide portion 416A and the other end connected to the first connector 330A illustrated in Fig. 3. A part of the first wiring 440A is drawn downward from one end of the first wiring 440A connected to the second wide portion 416A and passes through the first space 402A and the second space 304A. Another part of the first wiring 440A passes through the portion of the first base 302A located below the second space 304A and the region between the two rightmost end first frames 340A and is drawn into the space below the plurality of the first frames 340A. Yet another part of the first wiring 440A passes through the space between the adjacent first frames 340A in the region displaced rightward from the middle of the first holding body 300A and is drawn from the space below the plurality of the first frames 340A to the first connector 330A located above the plurality of the first frames 340A. The routing of the first wiring 440A is not limited to the example according to the present embodiment.

In the present embodiment, one end of the first wiring 440A connected to the second wide portion 416A is fixed to the second wide portion 416A by the second fixture 434A. In the present embodiment, the first wiring 440A is more easily attached and detached when the narrow portion 414A melts, as compared to the case where the one end of the first wiring 440A is fixed to the second wide portion 416A by soldering, for example. For example, the one end of the first wiring 440A may be provided with a connection part such as a crimp terminal. In this case, the one end of the first wiring 440A can be fixed to the second wide portion 416A by fixing the connection part with the second fixture 434A. However, the method of connecting the one end of the first wiring 440A to the second wide portion 416A is not limited to this example.

In the present embodiment, the second fixture 434A fixes both the second wide portion 416A and one end of the first wiring 440A connected to the second wide portion 416A to the first base 302A. In this case, the number of parts can be reduced as compared with the case where the fixture for fixing the second wide portion 416A to the first base 302A and the fixture for fixing the one end of the first wiring 440A to the first base 302A are provided individually. In another example different from the present embodiment, a fixture for fixing the second wide portion 416A to the first base 302A and a fixture for fixing the one end of the first wiring 440A to the first base 302A may be provided individually.

The portion of the second wide portion 416A where the second fixture 434A is provided functions as a voltage detection portion that detects the voltage of the terminal positive electrode lead 112T. Specifically, the terminal positive electrode lead 112T is subject to the voltage detection of the portion of the second wide portion 416A where the second fixture 434A is provided. The first wiring 440A functions as a voltage detection line electrically connected to the volage detection portion. In the present embodiment, one end of the first wiring 440A fixed by the second fixture 434A is electrically connected to the second wide portion 416A. In this case, the voltage of the terminal positive electrode lead 112T can be more accurately detected because the voltage of the terminal positive electrode lead 112T can be detected while reducing the influence of voltage drop of the narrow portion 414A, rather than when the first wiring 440A is electrically connected to the first wide portion 412A.

In Figs. 3 and 6, the second extending body 420A is electrically connected to the terminal positive electrode lead 112T. In the present embodiment, the right side surface of the second extending body 420A and the left side surface of the terminal positive electrode lead 112T are joined to each other by a joining method such as laser welding. The second extending body 420A may not be provided. When the second extending body 420A is not provided, the terminal positive electrode lead 112T and the first extending body 410A can be electrically connected via an unillustrated L-shaped bus bar.

At least a part of the second extending body 420A is held by at least a part of the first base 302A. In the present embodiment, the upper end of the first extending body 410A is held by the second direction Y opposite surfaces of the through-hole of the first base 302A through which the upper end of the first extending body 410A extends. The lower end of the second extending body 420A is held by the second direction Y opposite surfaces of the hole of the first base 302A into which the lower end of the second extending body 420A is inserted. In the present embodiment, it is preferable because the application of the force of rotating the narrow portion 414A in the direction perpendicular to the vertical direction can be suppressed, as compared to when the second extending body 420A is not held by the first base 302A. Accordingly, the narrow portion 414A can be less likely to break rather than when the second extending body 420A is not held by the first base 302A.

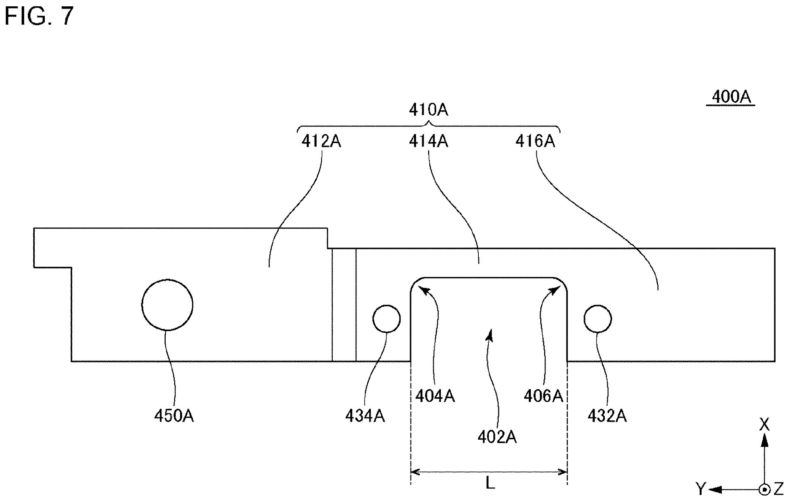

Fig. 7 is a top view of the first conductor 400A according to the embodiment.

In Fig. 7, the white circle with the black dot indicating the third direction Z indicates that the direction directed forward from the rear of paper is the positive direction of the third direction Z and the direction directed rearward from the front of paper is the negative direction of the third direction Z.

In the present embodiment, the first conductor 400A is designed to melt in the range of external short circuit current density of each battery cell 100 equal to or greater than 350 A/mm² and equal to or less than 900 A/mm². The external short circuit current density is current per unit cross-sectional area of the fuse that flows when the external short circuit of the battery occurs.

As viewed from the third direction Z, the first extending body 410A is provided with a first curve 404A from the outer edge of the narrow portion 414A to the outer edge of the first wide portion 412A. Specifically, as viewed from the third direction Z, the first curve 404A is provided at the inner corner portion between the front outer edge of the narrow portion 414A and the right outer edge of the first wide portion 412A. In one example, the first curve 404A is formed by punching of the first conductor 400A to form the narrow portion 414A. The radius of curvature R1 of the first curve 404A can be adjusted by adjustment of punching of the first conductor 400A. The inner corner portion between the front outer edge of the narrow portion 414A and the right outer edge of the first wide portion 412A may not be entirely curved and may partially include a straight shape.

In one example, as viewed from the third direction Z, the first curve 404A is an arc shape with the radius of curvature R1 equal to or greater than 1.0 mm and equal to or less than 3.0 mm.

When the radius of curvature R1 is equal to or greater than the lower limit of the range in the above example, the mechanical strength of the narrow portion 414A can be increased by the stress distribution at and around the first curve 404A of the first conductor 400A as compared with the case where the radius of curvature R1 is less than the lower limit of the range in the above example. Specifically, even if the torque is generated on the first conductor 400A around the first curve 404A on fixing the unillustrated bus bar to the fastening hole 450A by the unillustrated fixture, the first conductor 400A can be less likely to be subject to the plastic deformation around the first curve 404A when the radius of curvature R1 is equal to greater than the lower limit of the range in the above example, rather than when the radius of curvature R1 is less than the lower limit of the range in the above example. For example, the torque equal to or greater than 5.0 Nm and equal to or less than 15 Nm may be generated on the first conductor 400A around the first curve 404A on fixing the bus bar to the fastening hole 450A by the fixture.

When the radius of curvature R1 is equal to or less than the upper limit of the range in the above example, the narrow portion 414A more easily melts by the current concentration of the first conductor 400A at and around the first curve 404A and the narrow portion 414A can more easily function properly as a fuse, rather than when the radius of curvature R1 is greater than the upper limit of the range in the above example. For example, when the battery module 50 has a relatively high capacity of 50 kWh or greater, the current flowing through the narrow portion 414A around the first curve 404A can be more stable if the radius of curvature R1 is equal to or less than the upper limit of the range in the above example, rather than if the radius of curvature R1 is greater than the upper limit of the range in the above example.

As viewed from the third direction Z, the first curve 404A may not have an arc shape. As viewed from the third direction Z, the first curve 404A may partially include at least a curve shape that passes through the region enclosed by the outline of the first curve 404A when the first curve 404A has an arc shape that has a 1.0 mm radius of curvature and the outline of the first curve 404A when the first curve 404A has an arc shape that has a 3.0 mm radius of curvature. When the first curve 404A partially includes at least the curve shape, the first conductor 400A can be easily manufactured without impairing the strength of the first conductor 400A and the function of the narrow portion 414A as a fuse, as compared with the case where the first curve 404A has an arc shape where the radius of curvature R1 is accurately any one of 1.0 mm or greater and 3.0 mm or less.

When the first curve 404A partially includes at least the above curve shape, the first conductor 400A can be less likely to be subject to the plastic deformation around the first curve 404A even if the torque is generated on the first conductor 400A around the first curve 404A on fixing the unillustrated bus bar to the fastening hole 450A by the unillustrated fixture. Further, when the first curve 404A partially includes at least the above curve shape, the narrow portion 414A easily melts by the current concentration of the first conductor 400A at and around the first curve 404A and the narrow portion 414A can function properly as the fuse.

As viewed from the third direction Z, the first extending body 410A is provided with a second curve 406A from the outer edge of the narrow portion 414A to the outer edge of the second wide portion 416A. Specifically, as viewed from the third direction Z, the second curve 406A is provided at the inner corner portion between the front outer edge of the narrow portion 414A and the left outer edge of the second wide portion 416A. In one example, the second curve 406A is formed by punching of the first conductor 400A to form the narrow portion 414A. The radius of curvature R2 of the second curve 406A can be adjusted by adjustment of punching of the first conductor 400A. As viewed from the third direction Z, the second curve 406A can be formed into an arc shape with the radius of curvature R2 in the same range as the radius of curvature R1 of the arc shape of the first curve 404A. The radius of curvature R2 of the second curve 406A may be equal to or different from the radius of curvature R1 of the first curve 404A. As viewed from the third direction Z, the second curve 406A may partially include at least a curve shape the same as the above curve shape of the first curve 404A.

The cross-sectional area S of the narrow portion 414A in the second direction Y is preferably 40 mm² or greater and 100 mm² and more preferably 50 mm² or greater and 90 mm² or less, for example. The range of cross-sectional area S is determined according to the overcurrent value required to melt the narrow portion 414A. Specifically, the overcurrent value required to melt the narrow portion 414A is higher when the cross-sectional area S is equal to or greater than the lower limit of the range, rather than when the cross-sectional area S is less than the lower limit of the range. The overcurrent value required to melt the narrow portion 414A, on the other hand, is lower when the cross-sectional area S is equal to or less than the upper limit of the range, rather than when the cross-sectional area S is greater than the upper limit of the range. Further, the narrow portion 414A can be less likely to break due to external force when the cross-sectional area S is equal to or greater than the lower limit of the range, rather than when the cross-sectional area S is less than the lower limit of the range.

The length L of the narrow portion 414A in the second direction Y is preferably 10 cm or greater and 25 cm or less and more preferably 15 cm or greater and 20 cm or less, for example. In the example illustrated in Fig. 7, the length L is a length including the first curve 404A and the second curve 406A. The range of length L is determined according to the overcurrent value required to melt the narrow portion 414A, for example. The amount of overcurrent required to melt the narrow portion 414A lower when the length L is equal to or greater than the lower limit of the range, rather than when the length L is less than the lower limit of the range. The amount of overcurrent required to melt the narrow portion 414A, on the other hand, is higher when the length L is equal to or less than the upper limit of the range, rather than when the length L is greater than the upper limit of the range. Further, the narrow portion 414A can be less likely to break due to external force when the length L is equal to or less than the upper limit of the range, rather than when the length L is greater than the upper limit of the range.

The melting time of the narrow portion 414A when overcurrent flows is not specifically limited. In one example, the melting time of the narrow portion 414A when overcurrent of 7000 A or greater flows may be 0.05 second or greater and 0.3 second or less.

In the embodiment, the two curves of the first curve 404A and the second curve 406A are provided on opposite sides of the narrow portion 414A in the second direction Y. However, the first conductor 400A may be provided with only one of the first curve 404A and the second curve 406A. In this case, the inner corner portion of the first conductor 400A provided with the other of the first curve 404A and the second curve 406A may have a substantially right angle, for example, as viewed from the third direction Z.

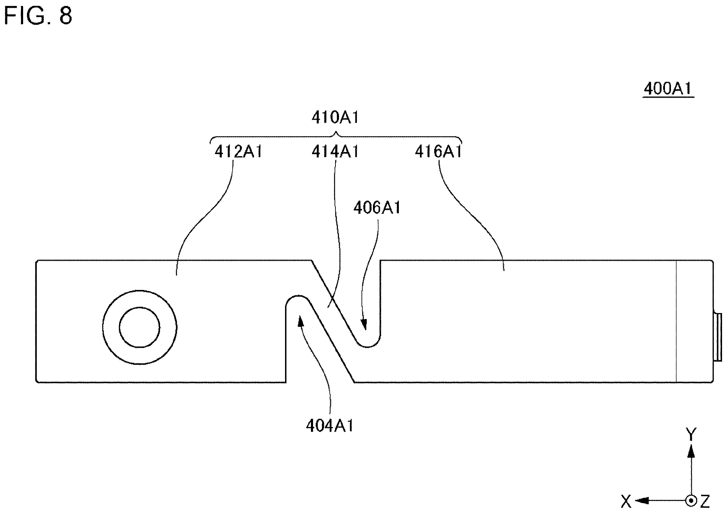

Fig. 8 is a top view of a first conductor 400A1 according to a variant. The first conductor 400A1 according to the variant is the same as the first conductor 400A according to the embodiment except for the following point.

As viewed from the third direction Z, the narrow portion 414A1 may be tilted obliquely with respect to the first direction X. In the example illustrated in Fig. 8, the left end portion of the narrow portion 414A1 is connected to the rear end portion of the right end portion of the first wide portion 412A1. The right end portion of the narrow portion 414A1 is connected to the front end portion of the left end portion of the second wide portion 416A1. The length of the narrow portion 414A1 according to the variant is 15 cm or greater and 20 cm or less, for example. The length of the narrow portion 414A1 according to the variant is the length of the portion of the narrow portion 414A1 having a constant width.

As viewed from the third direction Z, the first extending body 410A1 is provided with a first curve 404A1 from the outer edge of the narrow portion 414A1 to the outer edge of the first wide portion 412A1. As viewed from the third direction Z, the first curve 404A1 is provided at the inner corner portion between the front outer edge of the narrow portion 414A1 and the right outer edge of the first wide portion 412A1. The first curve 404A1 is formed by punching of the first conductor 400A1 to form the narrow portion 414A1. The radius of curvature R1 of the first curve 404A1 can be adjusted by adjustment of punching of the first conductor 400A1. The radius of curvature R1 of the arc shape of the first curve 404A1 according to the variant can be the same range as the radius of curvature R1 of the arc shape of the first curve 404A according to the embodiment. The first curve 404A1 according to the variant may partially include at least a curve shape the same as the curve shape of the first curve 404A described in the embodiment.

As viewed from the third direction Z, the first extending body 410A1 is provided with a second curve 406A1 from the outer edge of the narrow portion 414A1 to the outer edge of the second wide portion 416A1. As viewed from the third direction Z, the second curve 406A1 is provided at the inner corner portion between the rear outer edge of the narrow portion 414A1 and the left outer edge of the second wide portion 416A1. The second curve 406A1 is formed by punching of the first conductor 400A1 to form the narrow portion 414A1. The radius of curvature R1 of the second curve 406A1 can be adjusted by adjustment of punching of the first conductor 400A1. The radius of curvature R2 of the arc shape of the second curve 406A1 according to the variant can be the same range as the radius of curvature R2 of the arc shape of the second curve 406A according to the embodiment. The second curve 406A1 according to the variant may partially include at least a curve shape the same as the curve shape of the second curve 406A described in the embodiment.

The above is description of the embodiment and the variant according to the present invention with reference to the drawings, but these are examples of the present invention and various configurations other than the above may be adopted.

For example, the first fuse device 40A according to the embodiment is electrically connected to the battery cell 100. However, the first fuse device 40A may be electrically connected to electronic equipment different from the battery cell 100. The same is true for the second fuse device 40B.

This application claims priority based on Japanese patent application No. 2023-025994, filed on February 22, 2023, the disclosure of which is incorporated herein in its entirety by reference.

### REFERENCE SIGNS LIST

10 Cell stack, 20 Accommodation body, 30A First voltage detection device, 30B Second voltage detection device, 40A First fuse device, 40B Second fuse device, 50 Battery module 100 Battery cell, 100G Cell group, 102 Exterior member, 104 Adhesive member, 110 Lead portion, 112 Positive electrode lead, 112T Terminal positive electrode lead, 114 Negative electrode lead, 114T Terminal negative electrode lead, 210 First cover member, 220 Second cover member, 230 Third cover member, 240 Fourth cover member, 250 Fifth cover member, 260 Sixth cover member, 300A First holding body, 300B Second holding body, 302A First base, 304A Second space, 310A First voltage detection portion, 310B Second voltage detection portion, 312A First base end portion, 314A First tip end portion, 316A First connection portion, 316aA First barrel, 318A First support shaft, 320A First voltage detection line, 320B Second voltage detection line, 330A First connector, 330B Second connector, 340A First frame, 340B Second frame, 342A First edge portion, 344A Second edge portion, 346A Third edge portion, 348A Fourth edge portion, 350A Notch, 400A First conductor, 402A First space, 404A, 404A1 First curve, 406A, 406A1 Second curve, 410A, 410A1 First extending body, 412A, 412A1 First wide portion, 414A, 414A1 Narrow portion, 416A, 416A1 Second wide portion, 420A Second extending body, 432A First fixture, 434A Second fixture, 440A First wiring, 450A Fastening hole, X First direction, Y Second direction, Z Third direction

## Claims

1. A fuse device comprising:
a first conductive portion that functions as a fuse; and
a second conductive portion electrically connected to the first conductive portion and having a cross-sectional area greater than a cross-sectional area of the first conductive portion, wherein
a curve is provided from an outer edge of the first conductive portion to an outer edge of the second conductive portion.

2. The fuse device according to claim 1, wherein
the curve is provided at an inner corner portion from the outer edge of the first conductive portion to the outer edge of the second conductive portion, and
the curve of the inner corner portion is an arc shape with a radius of curvature equal to or greater than 1.0 **mm** and equal to or less than 3.0 **mm.**

3. The fuse device according to claim 1, wherein
the curve is provided at an inner corner portion from the outer edge of the first conductive portion to the outer edge of the second conductive portion, and
the curve of the inner corner portion partially includes at least a curve shape that passes through a region enclosed by an outline of the curve when the curve has an arc shape that has a 1.0 mm radius of curvature and an outline of the curve when the curve has an arc shape that has a 3.0 mm radius of curvature.

4. The fuse device according to claim 1, wherein
a cross-sectional area of the first conductive portion is 40 mm² or greater and 100 mm² or less.

5. A battery module comprising:
the fuse device according to any one of claims 1 to 4; and
at least one battery cell electrically connected to the fuse device.
